# EUROPÄISCHE PATENTSCHRIFT

(11) **EP 2 292 726 B1**
(45) Veröffentlichungstag und Bekanntmachung des Hinweises auf die Patenterteilung: **09.03.2016**
(21) Anmeldenummer: 10008230.4
(22) Anmeldetag: 06.08.2010
(51) Int. Cl.: C12C 7/01, C12C 7/16, C12C 7/22, C12F 3/06, F23G 5/46

(54) **Bierbereitungsverfahren sowie zugehörige Vorrichtung**
Beer processing method and device
Procédé de préparation de bière et dispositif correspondant

(30) Priorität: 07.08.2009 AT 12482009
(43) Veröffentlichungstag der Anmeldung: 09.03.2011
(60) Teilanmeldung: 15177463.5
(73) Patentinhaber: Hertel, Katja, 7500 St. Moritz (CH)
(72) Erfinder: Hertel, Marcus, deceased (AT)
(74) Vertreter: Ring & Weisbrodt

(56) Entgegenhaltungen:
- WO-A1-2007/121594
- WO-A1-2009/127430
- DE-A1- 4 428 978
- GB-A- 2 056 638
- Pfaffenhofener Kurrier: "Biomasse-Heizkraftwerk des Klosters eingeweiht" 4. April 2006 (2006-04-04), Seiten 1-1, XP002603059 Gefunden im Internet: URL:http://www.kloster-scheyern.de/06-betr iebe/Hackschnitzelheizung/Hackschnitzelhei zung-Einw.pdf [gefunden am 2010-09-29]
- Landkreismagazin Pfaffenhofen: "Holz aus Brauereiwald für Biomasse-Kraftwerk" 1. März 2004 (2004-03-01), Seiten 1-1, XP002603060 Gefunden im Internet: URL:http://82.165.16.99/eta_holzlogistik/u pload/546/Presseartikel%20vom%2001.%20Apri l%2004.jpg [gefunden am 2010-09-29]
- KROHNE: "Schneider Wiesse heizt mit KROHNE" 4. August 2009 (2009-08-04), Seiten 1-2, XP002603061 Gefunden im Internet: URL:http://www.krohne.com/fileadmin/media- lounge/PDF-Download/Press_Releases/2009/PR _20090804_Schneider_Weisse_KROHNE_DE_v3.pd f [gefunden am 2010-09-29]
- Stephen Law: "Brewing Biomass" 21. Juni 2008 (2008-06-21), Seiten 1-2, XP002603062 Gefunden im Internet: URL:http://kn.theiet.org/magazine/issues/0 811/brewing-biomass/cfm [gefunden am 2010-09-29]
- Eneratio/ Olaf Ahrens: "Bau des Biomasse-Heizkraftwerkes der Stadt Elmshorn" 21. Oktober 2004 (2004-10-21), Seiten 1-36, XP002603063 Gefunden im Internet: URL:http://www.eneratio.de/cms/upload/Inha ltsbilder/PDF_Daten/vortrag_bbe.pdf [gefunden am 2010-09-27]
- Bundesverband BioEnergie e.V.: "Fachkongress für Holzenergie" 21. Oktober 2004 (2004-10-21), Seiten 1-18, XP002603064 Gefunden im Internet: URL:http://users.skynet.be/erbe/Documents/ Agenda/IHE04_KoPro.pdf [gefunden am 2010-09-28]
- Anonymous/ Wikipedia: Bierbrauen 7. Januar 2008 (2008-01-07), Seiten 1-7, XP002603065 Gefunden im Internet: URL:http://web.archive.org/web/20080107030 903/http://de.wikipedia.org/wiki/Bierbraue n [gefunden am 2010-09-29]
- C.A.R.M.E.N.: "Biomasse Heizkraftwerk Pfaffenhofen" 1. November 2001 (2001-11-01), Seiten 1-4, XP002603066 Gefunden im Internet: URL:http://82.165.16.99/eta_holzlogistik/u pload/452/Info-Broschuere%20CARMEN.pdf [gefunden am 2010-09-29]
- RUSS W ET AL: "Biomass for heating applications in breweries /// Biomasse zur Wärmebereitstellung in Brauereien" BRAUWELT, NUERNBERG, DE, Bd. 146, Nr. 21, 1. Januar 2006 (2006-01-01), Seiten 612-616, XP009139345 ISSN: 0724-696X
- Hertel GmbH: "Messeneuheiten zur Brau Beviale 2010" 28. September 2010 (2010-09-28), Seiten 1-1, XP002603067 Gefunden im Internet: URL:http://www.hertel.cc/content/messeneuh eiten-zur-braubeviale-2010/index.php [gefunden am 2010-09-28]

## Beschreibung

Die Erfindung betrifft ein Verfahren zur Bierbereitung, wobei aus Malz eine Maische hergestellt, aus der Maische durch einen Läuterprozess eine Würze gewonnen, die Würze anschließend einer Temperaturbehandlung unterzogen, aus der behandelten Würze der Heißtrub abgeschieden, und nach der Heißtrubabscheidung aus der Würze durch eine Gärung Bier gewonnen wird. Die Erfindung beschäftigt sich insbesondere damit, die Energieeffizienz der Bierbereitung zu steigern. Die Erfindung betrifft darüber hinaus eine zur Durchführung des Verfahrens geeignete Vorrichtung.

Zur Bierbereitung wird in einem der ersten Schritte Malz eingemaischt, wobei die Malzbestandteile, in der Regel nach einer vorherigen Vermahlung, mit Wasser vermischt werden, um die festen Malzbestandteile des Mehlkörpers in Lösung zu bringen. Hierbei wird in der Regel das gesamte Malzkom, also inklusive der Spelzen, eingemaischt. Gegebenenfalls wird eine Maische auch unter zusätzlicher Verwendung sogenannter Rohfrucht - hierunter ist unvermälztes Getreide zu verstehen - hergestellt. Darüber hinaus sind auch Verfahren bekannt, bei welche die Spelzen zumindest teilweise vor dem Einmaischen vom Malz abgetrennt werden und zu späteren Zeitpunkten dem Brauprozess wieder zugeführt werden. Insbesondere werden die abgetrennten Spelzen im Läuterbottich vorgelegt. Ein Ausführungsform eines solchen Verfahrens ist beispielsweise in der DE 4411443 A1 beschrieben. Hierdurch kann der restliche Mehlkörper vor dem Einmaischen stärker vermahlen werden, da auf einen guten Zustand der Spelzen, welcher für einen effektiven Läuterprozess benötigt wird, hier keine Rücksicht mehr genommen werden muss. Durch die Vermeidung der Zugabe der Spelzen zum Maischen soll auch erreicht werden, dass weniger unedle Malzbestandteile sowie Farb- und/oder unerwünschte Aromastoffe, welche sich vornehmlich in den Spelzen befinden, in die Würze eingebracht werden. Aus dem seiben Grund werden auch Verfahren durchgeführt, bei welchen die Spelzen erst zu späteren Zeitpunkten nach dem Einmaischen der Maische zugesetzt werden, da hierdurch vor allem Extraktions- und Reaktionszeiten verringert werden können. Darüber hinaus sind auch Verfahren bekannt, bei welchen auf eine Zugabe der Spelzen zum Brauprozess vollkommen verzichtet wird. So wird beispielsweise in der US 3745018A ein Verfahren angegeben, bei welchem die Spelzen des Malzes vor dem Einmaischen vollkommen abgetrennt werden und die in der Würze enthaltenen Feststoffe vor einer Würzekochung durch Filtrations- oder Rotationsverfahren abgetrennt werden.

Die Spelzen oder die aus ihnen resultierenden Treber (hierunter sind die im Anschluss an einen Läuterprozess Übrigbleibenden Feststoffe, welche vor allem aus nassen Spelzen bestehen, zu verstehen) stellen im Brauprozess ein Abfallprodukt dar. Da der Verkauf dieses Abfallproduktes als Viehfutter immer schwieriger wird, wird bereits seit längerem versucht, es energetisch zu verwerten. So werden die aus dem Brauprozess resultierenden nassen Spelzen bzw. die Treber beispielsweise dazu verwendet, durch eine anaerobe Fermentation Biogas zu gewinnen. Aufgrund des hohen und schwer abbaubaren Cellulose- und des kaum oder nicht abbaubaren Ligninanteils gestaltet sich dies jedoch als sehr aufwendig, da beispielsweise alkalische Vorbehandlungen, ein Zusatz von Enzymen und/oder mechanisch-chemische Vorbehandlungen benötigt werden. Aus diesem Grund sind diese Verwertungsverfahren bisher nicht wirtschaftlich und haben sich demzufolge auch nicht durchsetzen können. Darüber hinaus sind auch Verfahren bekannt, bei welchen die nassen Spelzen bzw. die Treber zur Energiegewinnung verfeuert werden. Zur Erzielung der Selbstbrennbarkeit müssen die Treber jedoch zwingend vorgetrocknet werden, was meist durch mechanische Bandpresse erfolgt. Hierdurch wird zwar eine Brennbarkeit erreicht, allerdings weisen die Spelzen bzw. die Treber immer noch einen Immens hohen Wassergehalt auf, wodurch ihr Brennwert deutlich minimiert Ist und die Effizienz solcher Verfeuerungsverfahren ohne eine weitergehende Vortrocknung nahezu gegen Null geht. Da eine solche weitergehende Vortrocknung aber sehr energieintensiv ist, wurden Bestrebungen unternommen, diese effizienter zu gestalten. So ist aus der EP 1007884 B1 beispielsweise ein Verfahren bekannt, bei welchem zur weiteren Trocknung Rauchgase verwendet werden, welche im Energieverbund einer Brauerei ohnehin anfallen. der Treber noch keine effiziente energetische Nutzung gegeben, weswegen sich auch dieses Verfahren nicht durchsetzen konnte.

Aufgabe der Erfindung ist es, die Energieeffizienz einer Bierbereitung der eingangs genannten Art weiter zu verbessern. Hierzu soll ein Verfahren zur Bierbereitung sowie eine entsprechend geeignete Vorrichtung angegeben werden.

Diese Aufgabe wird für ein Verfahren zur Bierbereitung, wobei aus Malz eine Maische hergestellt, aus der Maische durch einen Läuterprozess eine Würze gewonnen, die Würze einer Temperaturbehandlung unterzogen, aus der behandelten Würze der Heißtrub abgeschieden, und nach der Heißtrubabscheidung aus der Würze durch eine Gärung Bier gewonnen wird, erfindungsgemäß dadurch gelöst, dass die Spelzen vor dem Einmaischen vollständig vom Malz abgetrennt werden und ein Teil der zuerst vollständig abgetrennten Spelzen dem Brauprozess vor oder während eines Läuterprozesses wieder zugeführt wird, wobei ferner ein Teil der abgetrennten Spelzen im trockenen Zustand zur Energiegewinnung verfeuert wird, wobei die Reduktion des Spelzenzusatzes zum Brauprozess beim Einsatz eines Läuterbottichs zwischen 10 und 60 % und beim Einsatz eines Maischefilters oder einer Zentrifuge zur Läuterung zwischen 30 und 95 % beträgt.

Unter Malz wird hierbei Malz in jeder Form verstanden. Insbesondere sind hierbei ganze Malzkörner, aber vor allem auch das im Zuge einer Zerkleinerung resultierende Malzschrot zu verstehen.

Unter "nur teilweise vom Malz abgetrennt" wird hierbei verstanden, dass zumindest ein Teil der im verwendeten Malz vorhandenen Spelzen dem Brauprozess zugeführt wird, damit Läutervorgänge effizient ablaufen können. So fallen neben einem direkten Mit-Einmaischen der (nicht abgetrennten) Spelzen zusammen mit dem Malz hierunter insbesondere auch Verfahren, bei welchen spelzenfreies Malz beziehungsweise Malzschrot zunächst alleine eingemaischt wird und Spelzen erst zu späteren Schritten der Maische zugegeben oder in Läutereinrichtungen, wie Läuterbottichen oder Maischefiltern, vorgelegt werden. Unter "nur teilweise vom Malz abgetrennt" ist somit insbesondere auch eine vollständige Abtrennung der Spelzen vom Malz oder Malzschrot zu verstehen, solange zumindest ein Teil der zuerst vollständig abgetrennten Spelzen dem Brauprozess vor oder während eines Läuterprozesses wieder zugeführt und somit nicht dauerhaft von den anderen Malzbestandteilen abgetrennt wird.

Die Erfindung erkennt dabei in einem ersten Schritt, dass die im Malz vorhandenen Spelzen in ihrem trockenen Zustand einen sehr hohen Brennwert aufweisen, welcher bei herkömmlichen Brauverfahren aufgrund der Zumischung zu Wasser aber nicht mehr genutzt werden kann, da Spelzen nach dem Einmaischen im nassen Zustand vorliegen und auch keine Selbstbrennbarkeit mehr aufweisen. Um diese wieder Herzustellen, muss der Feuchtigkeitsgehalt wieder mindestens unter 58 % gebracht werden, was naturgemäß einen äußerst energieintensiven Vorgang darstellt. Aber selbst nach einer ausreichenden Trocknung und einem Erreichen der Selbstbrennbarkeit kann eine Verbrennung der feuchten Spelzen nicht effizient durchgeführt werden, da bei der Verbrennung immer auch die Vordampfungsenthalpie des noch enthaltenen Wassers aufgebracht werden muss, sodass sich hier zwar ein hoher Heizwert, jedoch ein niedriger Brennwert ergibt und eine Verbrennung ohne die Rückgewinnung der Enthalpie der dabei entstehenden Wasserdämpfe äußerst ineffizient ist. Die Erfindung erkennt somit, dass eine energetische Verwertung der Spelzen durch Verfeuerung nach einem Zuführen in den Brauprozess - und somit einer Erhöhung des Wassergehaltes - aufgrund der für das enthaltene Wasser aufzubringenden Verdampfungsenthalpie nicht mehr effizient gestaltet werden kann. Werden Spelzen jedoch vor dem Einmaischen, also in ihrem trockenen Zustand verbrannt muss weder die Energie für den Trocknungsvorgang aufgebracht werden, noch ist der Brennwert der Spelzen geringer als derjenige trockener Getreideschalen. Im Gegenteil: Die Erfindung erkennt, dass die Spelzen nach dem im Mätzungsprozess zu vollziehenden Darrprozess derart trocken sind, dass sie einen im Vergleich zu anderem Getreide enorm hohen Brennwert aufweisen. Im Trockenzustand haben Spelzen ungefähr einen identischen Brennwert wie Braunkohle. Mit dem geringen Feuchtigkeitsgehalt, den die Spelzen nach dem Darrprozess aufweisen, liegt ihr Brennwert je nach Restfeuchte zwischen 4,5 und 5,2 kWh/kg. Insofern entsprechen 1 kg Spelzen vor dem Einmaischen ca. dem Brennwert von ca. 2 I heizöl leicht oder ungefähr 1 kg Erdgas. Dies macht deutlich, welchen Brennwert Spelzen vor einer Vermischung mit Wasser zum Einmaischen besitzen.

In einem weiteren Schritt erkennt die Erfindung, dass zur Herstellung einer Würze nicht alle Spelzen in den Brauprozess eingebracht werden müssen. Vielmehr ist es auch bei konventionellen Läuterprozessen durchaus möglich und für die Effizienz auch durchaus sinnvoll, nur einen Teil der Spelzen einzumaischen bzw. zu späteren Schritten dem Brauprozess zuzuführen. So können herkömmliche Läuterprozesse auch mit beispielsweise nur der Hälfte der Spelzen des eingesetzten Malzes problemlos durchgeführt werden. Auch hier hat die sich im Läuterbottich ausbildende Filterschicht noch eine genügend klärende Wirkung, jedoch einen geringeren Widerstand, sodass Läuterprozesse auch in einem herkömmlichen Läuterbottich beschleunigt ablaufen können. Bei Verwendung von Maischefiltern zum Läutern kann die dem Brauprozess zugesetzte Menge noch deutlich weiter reduziert werden.

Die Erfindung erkennt schließlich, dass Spelzen, die nicht dem Brauprozess zugeführt werden, aufgrund ihres hohen Brennwertes zur Energiegewinnung verfeuert werden können, ohne hierbei vor dem Verbrennungsvorgang eine effizienzmindemde Trocknung durchführen zu müssen. Zusätlich erkennt die Erfindung, dass auch bei einer nicht idealen Trennschärfe der Abtrennung der Spelzen das Verfahren noch überaus wirtschaftlich ist, da der hierbei zusätzlich zu den reinen Spelzen ebenfalls vom Malz abgetrennte - und somit nicht dem Brauprozess zugeführte - Extrakt ebenfalls einen hohen Brennwert aufweist und somit bei einer Verfeuerung effizient energetisch genutzt werden kann. Ein teilweiser Extraktverlust und somit eine geringere Sudhausausbeute kann somit zumindest partiell ausgeglichen werden. Unterstützt wird dies durch die Tatsache, dass bei herkömmlichen Brauverfahren aufgrund des höheren Spelzenanteils auch ein größerer Anteil an Extrakt als auswaschbarer und aufschließbarer Extrakt in den Trebem verbleibt, sodass hier ohnehin größere Extraktverluste zu verzeichnen sind. Die Erfindung erkennt somit, dass bei einer Abtrennung von Teilen der Spelzen des zum Brauen eingesetzten Malzes im trockenen Zustand und deren anschließender Verfeuerung große Mengen von Energie frei werden, welche insbesondere für den Brauprozess sinnvoll genutzt werden können. Demnach erkennt die Erfindung, dass die Spelzen im trockenen Zustand kein Abfallprodukt, sondern einen hochwertigen Energieträger darstellen, mit welchem nahezu der gesamte Energiebedarf bei der Bierbereitung abgedeckt werden kann.

Unter trockenem Zustand wird hierbei jeder Feuchtigkeitsgehalt verstanden, welchen Malz nach dem Mälzungsprozess aufweisen sowie zusätzlich während einer Lagerung aufnehmen kann, bevor das Malz dem Brauprozess zugeführt wird und folglich In großem Maße mit Wasser in Verbindung kommt. Sprelzen eines leicht vorkonditionierten Malzes fallen demzufolge ebenfalls unter den Begriff trocken, da ihr Wassergehalt im Gegensatz zu dem eingemaischter Spelzen immer noch vernachlässigbar gering ist. Trocken bedeutet demzufolge insbesondere, dass die Spelzen noch nicht eingemaischt bzw. Wasser zugegeben wurden.

Unter Verfeuerung wird jedwede thermische Verwertung durch Verbrennen verstanden. Die Funktionsweise der Verteuerung kann hierbei beispielsweise derart umschrieben werden, dass in den Spelzen gespeicherte Energie durch Oxidation in Form einer Verbrennung in nutzbare Energie (Wärme) umgewandelt wird. Insbesondere ist unter Verfeuerung eine direkte Verbrennung zu verstehen.

Insbesondere wird unter dem Begriff Verfeuerung aber auch ein Prozess verstanden, bei welchem zur Energiegewinnung aus den Spelzen durch eine thermische Vergasung vorher ein Gas produziert wird. Das hierbei erzeugte Gas kann somit zur Energiegewinnung verwendet werden, wobei das entstandene "Spelzengas" insbesondere in ohnehin in der Brauerei vorhandenen bzw. bestehenden gasbetriebenen Kesseln verfeuert bzw. verbrannt wird. Hierbei bietet sich vorteilhafter Weise eine zumindest teilweise Zumischung des aus den Spelzen und gegebenenfalls weiteren Stoffen erzeugten Gases zu den sonst verwendeten Gasen, wie beispielsweise Erdgas, an. Die Herstellung eines "Spelzengases" kann prinzipiell mit einer Holz- bzw. Stroh(ballen)vergasung verglichen werden. Da der Prozess der thermischen Biomassevergasung cellulosehaltiger Produkte wie Holz oder Stroh bekannt ist, wird im Folgenden nicht näher darauf eingegangen sondern auf die einschlägige Fachliteratur Bezug genommen.

Die Entfernung der Spelzen vom Malz kann beispielsweise durch Mühlen erfolgen, welche Einrichtungen zum Abtrennen der Spelzen, wie beispielsweise Windsichter oder Siebe - und hier insbesondere Schüttel- oder Rüttelsiebe -, enthalten. Hierbei können zerkleinerte Spelzen in sehr reiner Form erhalten werden, wodurch Extraktverluste minimal sind. Solche Mühlen, welche in der Regel auch als Schrotmühle eingesetzt werden können und meist als 6-Walzen-Mühle aufgebaut sind, sind - auch Im Braubereich - hinlänglich bekannt, weswegen hier auf deren Funktionswelse nicht näher eingegangen wird. Darüber hinaus kann ein Abtrennen der Spelzen beispielsweise auch durch Reibe- oder Schälmaschinen erfolgen, wobei hier ein Abtrennen der Spelzen vor einer gezielten Zerkleinerung des Malzkornes erfolgt. Auch solche Maschinen sind in der getreideverarbeitenden Industrie hinlänglich bekannt Eine Ausführungsform einer Schälmaschine für Brauprozesse wird beispielsweise in der DE 102006019609 A1 beschrieben.

Welche energetischen Vorteile durch das erfindungsgemäße Verfahren in einer Brauerei erzielt werden können, soll an folgendem allgemeinen Beispiel kurz erläutert werden: Eine Brauerei, welche mit einer Malzschüttung von 16 kg/hl, einer Gesamtverdampfung von 4 %, einer Einmaischtemperatur von 64 °C. einem 50 %igen Hauptgussanteil und einer Hochtemperatur von ca. 100 °C (atmosphärisch) braut und welche außer bei der Würzekühlung keine Maßnahmen zur Wärmebzw. Energierückgewinnung betreibt, benötigt unter Vernachlässigung spezifischer Wirkungsgradverluste Energie von ca. 6 kWh pro hl Ausschlagwürze. Bei einem Spelzenanteil (inkl. des daran noch gebundenen Extraktes) des eingesetzten Malzes von ca. 15 %, kann diese Brauerei durch eine Verfeuerung von nur 30 % der entfernten, trockenen Spelzen ca. 3,5 kWh Energie erzeugen und somit bereits über 50 % der zur Herstellung der Würze benötigten Energie selbst erzeugen. Bei dieser geringen Reduktion der dem Brauprozess zugefügten Spelzen, kann ein bestehender Läuterbottich problemlos weiterbetrieben werden, da sich auch hier immer noch eine ausreichende Filterschicht durch die noch zugeführten Spelzen ergibt. Bei einer Reduktion des Speizeneinsatzes um 55 % kann diese Brauerei sogar die gesamte, für die Herstellung der Ausschlagwürze benötigte Energie alleine durch eine erfindungsgemäße Verfeuerung der nicht zugesetzten, trockenen Spelzen in der Brauerei erzeugen. Durch die Verwendung von Wärmerückgewinnungsapparaturen, wie beispielsweise Pfannendunstkondensatoren, oder die Einführung neuer Verfahren, mit welchen die zum Austreiben unerwünschter Aromastoffe benötigte Gesamtverdampfung deutlich reduziert werden kann, wie beispielsweise der Rektifikationswürzekochung, kann sich durch das erfindungsgemäße Verfahren im Sudhaus sogar ein Energieüberschuss ergeben. Bei einer ausreichend großen Reduktion des Spelzenzusatzes, wie sie vor allem bei der Verwendung moderner Maischefilter möglich ist, kann durch das erfindungsgemäße Verfahren im Idealfall sogar die gesamte, in einer Brauerei benötigte Energie aus den abgetrennten Spelzen gewonnen werden. Dieses Beispiel macht deutlich, welche Bedeutung das erfindungsgemäße Verfahren für die gesamte Braubranche besitzt.

Die Reduktion des Spelzenzusatzes zum Brauprozess kann hierbei je nach Brauereigegebenheiten variiert werden. Prinzipiell ist es jedoch vorteilhaft, eine Reduktion bis zu dem Maße durchzuführen, zu welchem der Brau- bzw. Läuterprozess noch problemlos oder sogar verbessert abläuft. Letzteres kann dadurch geschehen, da bei herkömmlichen Brauprozessen das Verhältnis aus zugesetzten Spelzen zu eingesetztem Extrakt oft zu hoch ist, sodass sich auch zu hohe Filterschichten ergeben können, welche der zu klärenden Würze einen sehr hohen Widerstand entgegensetzen, weswegen Läuterprozesse stark verlangsamt ablaufen und oftmals nur durch einen massiven Einsatz des Hack- bzw. Schneidwerks aufrecht erhalten werden können. Beim Einsatz herkömmlicher Läuterbottiche erfolgt eine Reduktion des Speizenzusatzes zum Brauprozess vorteilhafterweise um 10 bis 60 %, insbesondere um 20 bis 50 %. Bei Verwendung von Maischefiltern oder Zentrifugen zur Läuterung liegt eine Reduktion des Spelzenzusatzes zum Brauprozess vorteilhafterweise zwischen 30 und 95 % (zur Unterstützung des Filtrationsprozesses sollte auch bei Verwendung moderner Maischefilter ein Mindestanteil an Spelzen in der Maische vorhanden sein), insbesondere bei 50 - 80 %. Vorteilhafterweise werden hierbei auch alle abgetrennten Spelzen zur Energiegewinnung verfeuert.

In einer - vor allem "außerhalb des Reinheitsgebotes" - vorteilhaften Ausgestaltung der Erfindung, wird zusätzlich zum Malz dem Brauprozess auch ein gewisser Anteil an Rohfrucht zugesetzt bzw. auch mit dieser eingemaischt. Unter Rohfrucht wird hierbei Getreide vor einer Vermätzung verstanden. Zur Verbesserung der Maischarbeit können in diesem Fall auch Enzyme zugesetzt werden. Vorteilhafterweise wird auch die Rohfrucht zumindest teilweise von der Schale separiert und die Schale zur Energiegewinnung verfeuert. Da die Schale von Rohfrucht einen höheren Wassergehalt aufweist als die Spelzen von Malz, kann diese vor einer Verbrennung vorgetrocknet werden. Prozesstechnisch kann mit der Schale von Rohfrucht so verfahren werden, wie mit den Spelzen von Malz, wobei zur Abtrennung der Schale aufgrund der Beschaffenheit von Rohfrucht vorzugsweise Reib- oder Schälmaschinen verwendet werden. Die für die Verfeuerung von Spelzen beschriebenen Vorgehensweisen können auch auf die Verfeuerung von Rohfruchtschale angewendet werden.

In einer vorteilhaften Ausgestaltung der Erfindung werden die Spelzen direkt vor dem Einmaischen vor und/oder während des Schrotens vom Malz entfernt. Hierbei können entweder die gesamten Spelzen abgetrennt werden und von den abgetrennten Spelzen ein Teil für Verfeuerungsvorgänge entnommen werden, während der andere Teil zumindest teilweise dem Brauprozess wieder zugeführt wird. Diese Zuführung erfolgt vorteilhafterweise direkt zum Einmaischen. Darüber hinaus können die Spelzen auch zu späteren Schritten dem Maischprozess zugegeben oder im Läuterbottich vorgelegt werden. Des Weiteren kann auch nur ein Teil der Spelzen von den Malzkömem abgetrennt werden, während der Rest am Kom verbleibt und mit dem Kom eingemaischt wird. Für eine derartige Ausgestaltung kommen zur Entfernung der Spelzen vor allem Schälmaschinen zum Einsatz, da bei diesen der Schälgrad - in der Regel stufenlos - eingestellt werden kann.

In einer weiteren vorteilhaften Ausführung wird das Malz vor dem Brauprozess von den Spelzen befreit und das Malz sowie die abgetrennten Spelzen bis zum Brauprozess gelagert. Dies kann zum einen in der Brauerei geschehen, hat vor allem aber den Vorteil, dass der Trennvorgang bereits beim Malzproduzenten vollzogen werden kann. Hierdurch können Brauereien ihr Malz Inklusive der abgetrennten Spelzen direkt beziehen, ohne eine - unter Umständen teure - Einrichtung zur Spelzentrennung selbst anschaffen zu müssen. Eine Brauerei kann somit Malz und Spelzen separat beziehen und in der Brauerei beispielsweise einen Teil der Spelzen dem Brauprozess zuführen, während der restliche Teil zur Energiegewinnung verfeuert wird.

Die abgetrennten Spelzen werden vorteilhafterweise direkt einer Verfeuerungseinrichtung zugeführt. Diese Zuführung kann durch Förderbänder oder Leitungssysteme erfolgen. Da die Abtrennung der Spelzen bereits vor und/oder während des Einmaischens erfolgt, kann bei einer direkten Zuführung zu einer Verfeuerungseinrichtung mit den bei einem Sud abgetrennten Spelzen bereits Energie für den gleichen Sud gestellt werden. Die Energieproduktion erfolgt hier sozusagen "Just-in-Time", wodurch der logistische sowie räumliche Aufwand für eine Lagerung der Spelzen entfällt.

In einer anderen, ebenfalls vorteilhaften Ausführung werden die abgetrennten Spelzen vor einer Verfeuerung zwischengelagert. Hierdurch können sie exakt dann zur Energiegewinnung verfeuert werden, wenn diese benötigt wird. Insbesondere kann hierdurch auch Energie für Prozesse außerhalb des Sudhauses erzeugt werden. Im "Extremfall" kann eine Verbrennung auch außerhalb der Brauerei erfolgen, wodurch mittels eines eigentlichen Abfallproduktes aus Brauprozessen auch Energie für brauereifremde Zwecke bereitgestellt werden kann. Gerade in diesem Fall können die abgetrennten, trockenen Spelzen auch noch zu gepressten Brennstoffen, wie beispielsweise Pellets oder Briketts, weiterverarbeitet werden. Um Transportwege zu vermeiden, erfolgt eine Verfeuerung aber in der Regel direkt in einer Brauerei, da hiermit Energie für jedweden Prozess der Bierherstellung, angefangen vom Maischen bis hin zur Reinigung des zurückgeführten Leergutes, erzeugt werden kann.

Zur Verfeuerung der Spelzen können herkömmliche Brennöfen zum Einsatz kommen, wie Sie auch bei der Verfeuerung von Hackschnitzeln oder Holzpellets Verwendung finden. Solche Verfeuerungseinrichtungen sind hinlänglich bekannt, weswegen hier nicht weiter auf deren Aufbau und Funktionsweise eingegangen wird.

Vorteilhafterweise werden solche Brennöfen derart dimensioniert, dass unter zusätzlicher Verfeuerung von Brennstoffen, welche bevorzugt auch aus nachwachsenden Rohstoffen hergestellt werden - wie beispielsweise (Holz-)Pellets und/oder Hackschnitzel - der Wärmeenergiebedarf des Sudhauses oder sogar der gesamten Brauerei erzeugt werden kann. Da durch das erfindungsgemäße Verfahren durch die Verfeuerung der Spelzen bereits ein großer Teil der benötigten Energie oder Wärme bereitgestellt werden kann, müssen hier nur verhältnismäßig geringe Mengen solcher Brennstoffe zugekauft werden. Dies hat aber den entscheidenden Vorteil, dass Brauereien ihre Abhängigkeit von fossilen Brennstoffen, wie beispielsweise Erdöl oder Erdgas, verlieren. Darüber hinaus steigt hierdurch die "Umweltfreundlichkeit" des Brauprozesses deutlich an.

Für ein schnelleres und vollständigeres Verbrennen der Spelzen und somit zur Effizienzsteigerung werden die Spelzen vorteilhafterweise - evtl. unter einem vorangegangenen weiteren Zerkleinern und/oder Vermahlen - zusammen mit Luft in die Brennkammer eingeblasen. Im Gegensatz zu einem einfachen Vorlegen können sich hierdurch Vorteile bei der Erzeugung von Wärme/Energie ergeben.

Die bei der Verfeuerung freiwerdende Wärme wird vorteilhafterweise zur Erzeugung von Prozessdampf verwendet. Hierzu ist die Verfeuerungseinrichtung vorteilhafterweise direkt mit einem Dampfkessel verbunden. Darüber hinaus kann die Wärme auch zur Bereitstellung von Heißwasser verwendet werden. Mit dem so erzeugten Dampf oder Heißwasser können dann - beispielsweise Ober einen in der Regel ohnehin vorhandenen Dampfkreislauf - vorteilhafterweise die einzelnen Sudhauseinrichtungen beheizt werden. Insbesondere kann der Dampf oder das Heißwasser für die Maischebereitung und/oder die Würzekochung verwendet werden.

Darüber hinaus kann die bei der Verfeuerung freiwerdende Energie unter Einsatz entsprechender dazu geeigneter Einrichtungen wie Generatoren auch zur Erzeugung von elektrischer Energie bzw. Strom verwendet werden, welcher Insbesondere in den Stromkreislauf der Brauerei eingespeist werden kann. Insbesondere eignet sich das erfindungsgemäße Verfahren auch bei einer Verwendung von Blockheizkraftwerken (BHKW).

Die bei der Verbrennung entstehenden Abgase werden vorteilhafterweise Wärmetauschern zugeführt, wodurch die in ihnen enthaltene Wärme, beispielsweise für Heizkreisläufe, genutzt werden kann. Hierdurch steigt die Effizienz des erfindungsgemäßen Verfahrens noch weiter an.

Darüber hinaus kann die bei der Verfeuerung entstehende Abwärme vorteilhafterweise zur Trocknung von weiterem Material verwendet werden. Insbesondere könne die entweichenden Rauchgase für die Trocknung von Treber, Abfallhefe und/oder nasser Altetiketten eingesetzt werden, wodurch deren Wassergehalt abnimmt. Dieses Material kann dann auch für darauffolgende Verfeuerungsvorgänge den Spelzen zugegeben werden, wodurch zusätzliche Energie gewonnen werden kann.

Des Weiteren können zur weiteren Energiegewinnung auch Reststoffe bzw. Abfälle, welche in einer Brauerei anfallen, mit verbrannt werden. Insbesondere können hier gelagerte Altetiketten oder Kartonagen verfeuert werden. Hierdurch kann sich auch der weitere Vorteil ergeben, dass hierfür keine Entsorgungsgebühren entrichtet werden müssen.

Asche kann aber auch als wertvolles Düngemittel herangezogen werden, da sie noch einen verhältnismäßig hohen Nährstoffgehalt aufweist. Im Gegensatz zu Asche der meisten Holzarten - vor allem derjenigen von behandeltem Holz - enthält die Asche, welche aus der erfindungsgemäßen Verfeuerung trockener Spelzen resultiert, aber verhältnismäßig wenig Schadstoffe, insbesondere Schwermetalle, welche nicht nur die Umwelt, sondern auch das Pflanzenwachstum beeinträchtigen würden. Die aus dem Verfahren resultierende Asche kann aufgrund ihrer Beschaffenheit folglich sehr gut als Naturdünger dienen, da sie zum einen stark basisch ist und somit die Pufferkapazität von versauerten Böden erhöhen kann und zum anderen sehr schnell wirkt, da sie sich sehr gut löst. Die Asche wird vorteilhafterweise anderem Düngemittel oder Pflanzenerde zugesetzt. Die Asche kann demzufolge auch zum Düngen von Feldern benutzt werden, auf welchen Braugetreide angepflanzt wird. Somit ist auch hier der Kreislauf geschlossen und Brauereien können ihrem Ruf nach einer ökologischen sinnvollen, nachhaltigen Produktion noch weiter gerecht werden. Insbesondere entspricht die Düngung mit dieser Asche auch ökologischen Richtlinien, solange das verwendete Braugetreide nicht mit chemischen beziehungsweise künstlichen Dünge- und/oder Schädlingsbekämpfungsmitteln behandelt wurde. Da die Asche, wie beschrieben, ein sehr hochwertiges Düngemittel darstellt, welches insbesondere auch gewinnbringend verkauft werden kann, können sich hier weitere monetäre Vorteile für Brauereien - welche auch aus einer Vermeidung von Entsorgungsvorgängen resultieren - ergeben.

Die auf eine Vorrichtung gerichtete Aufgabe wird für eine Vorrichtung zur Bierbereitung mit einem Behälter zur Maischebereitung, mit einer Läutereinrichtung, mit einem Behälter zur Temperaturbehandlung der Würze, mit einem Heißtrubabscheider, mit einem Gärbehälter und mit einer Trennvorrichtung zur Abtrennung der Spelzen vom Malz, insbesondere einer Mühle oder Schälmaschine, erfindungsgemäß dadurch gelöst, dass die Trennvorrichtung zur vollständigen Abtrennung der Spelzen vom Malz, wobei ein Teil der zuerst vollständig abgetrennten Spelzen dem Brauprozess vor oder während eines Läuterprozesses wieder zugeführt wird, mit einer Einrichtung zur Verfeuerung eines Teils der sich im trockenen Zustand befindenden abgetrennten Spelzen zwecks Energiegewinnung, wobei die bei der Verfeuerung frei werdende Energie für den Brauprozess genutzt wird, mittels Fördereinrichtungen zum Transport der abgetrennten Spelzen verbunden ist.

Wie für das Verfahren vorgeschrieben, kann durch die nur teilweise Entfernung der Spelzen vom Malz und deren zumindest teilweiser Verbrennung im trockenen Zustand in einer Einrichtung zur Verfeuerung der abgetrennten Spelzen der Energiebedarf beim Brauen drastisch reduziert werden. Hierdurch entstehen Kostenvorteile für Brauereien. Durch die Reduzierung des Bedarfs fossiler Brennstoffe kann darüber hinaus auch ein merklicher Beitrag zum Umweltschutz geleistet werden.

Dabei können die für das Verfahren genannten Vorteile sinngemäß auf die Vorrichtung übertragen werden. Weitere vorteilhafte Ausgestaltungen finden sich in den auf eine Vorrichtung gerichteten Unteransprüchen.

Für die Vorrichtung ist es dabei nicht nötig, dass die angegebenen Prozesse alle in verschiedenen Behältern ablaufen. Es soll von der erfindungsgemäßen Vorrichtung genauso umfasst sein, dass die Maischebereitung, der Läuterprozess, die Temperaturbehandlung, die Heißtrubabscheidung und/oder die Gärung auch in einem einzigen Behälter oder jeweils einzelne dieser Prozesse in einem gemeinsamen Behälter zusammengefasst sein können. So wird insbesondere eine Ausgestaltung umfasst, gemäß der die Maischebereitung und die Temperaturbehandlung in einer Pfanne, oder die Temperaturbehandlung und die Heißtrubabscheldung in einer Pfanne durchgeführt werden.

In einer äußerst bevorzugten Ausführung ist die Läutereinrichtung als Läuterbottich aufgebauk, welcher prozesstechnisch zwischen dem Behälter zur Maischebereitung und dem Behälter zur Temperaturbehandlung der Würze angeordnet ist. In einer ebenfalls äußerst bevorzugten Ausführung ist die Läutereinrichtung als Maischefilter ausgebildet.

In einer bevorzugten Ausgestaltung ist die Trennvorrichtung zur Abtrennung der Spelzen prozesstechnisch dem Behälter zur Maischebereitung vorgeschaltet. Eine solche Trennvorrichtung ist vorteilhafterweise eine Mühle zum Zerkleinern des Malzes oder der Rohfrucht mit einer entsprechenden Trennvorrichtung zum Abtrennen von Spelzen oder eine Schälmaschine zum Abschälen von Spelzen und/oder Schalen. Insbesondere befindet sich die Trennvorrichtung am Ort der Brauerei, so dass die Entfernung von Spelzen direkt vor dem Brauen bzw. dem Sudvorgang bedarfsweise erfolgen kann. Auch kann das geschälte Malz oder die geschälte Rohfrucht zwischengelagert und dann bedarfsweise dem Behälter zur Maischebereitung zugeführt werden. Die Trennvorrichtung kann aber auch bei einer Zulieferindustrie stehen und Ist auch in diesem Sinne als prozesstechnisch dem Behälter zur Maischebereitung vorgeschaltet anzusehen.

Bevorzugt Ist der Trennvorrichtung zur Abtrennung der Spelzen direkt die Einrichtung zur Verfeuerung der abgetrennten Spelzen nachgeschaltet Hierzu weist die Vorrichtung geeignete Fördereinrichtungen, wie beispielsweise Förderbänder oder Leitungen, auf, mit welchen die abgetrennten Spelzen direkt zur Einrichtung zur Verfeuerung transportiert werden können.

In einer weiteren, vorteilhaften Ausgestaltung ist der Trennvorrichtung zur Abtrennung von Spelzen ein Vorratsbehälter nachgeschaltet, welcher ebenfalls durch Fördereinrichtungen mit der Trennvorrichtung verbunden ist. Ein solcher Vorratsbehälter ist folglich zwischen die Trennvorrichtung zur Abtrennung der Spelzen und die Einrichtung zur Verfeuerung geschaltet.

Die angesprochene Trennvorrichtung zur Abtrennung von Spelzen vom Malz und/oder von der Rohfrucht ist besonders bevorzugt in eine Leitung, die das Getreide oder das Malz zum Behälter zur Maischebereitung befördert, integriert. Somit kann das Malz oder die Rohfrucht kontinuierlich vor der Schrotung bzw. vor dem Einmaischen behandelt werden. Die Leitung, die das Malz oder die Rohfrucht zum Maischgefäß oder zur Schrotmühle befördert, ist bevorzugt Ober Flanschverbindungen mit der Trennvorrichtung zur Abtrennung von Spelzen verbunden. Somit kann das Malz oder die Rohfrucht direkt in die Trennvorrichtung zur Abtrennung von Spelzen hinein befördert werden. An der Trennvorrichtung ist eine weitere Leitung zu dem Behälter zur Maischebereitung vorgesehen, die ebenfalls insbesondere mit Flanschverbindungen befestigt ist. Diese Leitung ist in einer vorteilhaften Ausführung darüber hinaus noch mit einem sogenannten Einmaischer verbunden.

Bei Verwendung von Rohfrucht, welche vorteilhafterweise anders behandelt wird als das Malz, weist die Vorrichtung vorteilhafterweise eine separate Einrichtung zur Abtrennung von Rohfruchtschalen auf. Diese Vorrichtung ist vorteilhafterweise eine Schälmaschine.

Da Spelzen ähnliche Verbrennungseigenschaften wie Hackschnitzel oder Pellets - und hier insbesondere Holzpellets - besitzen, ist die Einrichtung zur Verfeuerung vorteilhafterweise wie ein Brennofen zur Verfeuerung von Hackschnitzeln und/oder Pellets aufgebaut Rauch- bzw. abgasseitig ist die Einrichtung zur Verfeuerung über geeignete Leitungen vorteilhafterweise mit einem Wärmetauscher zur Rückgewinnung der noch enthaltenen Wärme und/oder mit Einrichtung zur Reinigung der Ab- bzw. Rauchgase, hier insbesondere mit geeigneten Filtern und/oder Gaswäschern verbunden.

In einer ebenfalls vorteilhaften Ausführung Ist die Einrichtung zur Verfeuerung als thermischer Vergaser ausgebildet, welcher vorteilhafter Weise wie die bekannten Holz- bzw. Strohvergaser aufgebaut ist.

Vorteilhafterweise ist die Verfeuerungseinrichtung zur Erzeugung von Prozessdampf und/oder Heißwasser mit einem Dampf- bzw. Heizkessel verbunden, welcher vorteilhafterweise über geeignete Leitungen bzw. ein geeignetes Leitungsnetz mit den Einrichtungen des Sudhauses und oder der restlichen Brauerei verbunden ist

In einer weiteren vorteilhaften Ausgestaltung ist die Einrichtung zur Verfeuerung der Spelzen mit geeigneten Einrichtung, vorzugsweise Generatoren verbunden, mit welchen - insbesondere über eine zwischengeschaltete Dampferzeugung aus Brauch- und/oder Abwasser der Brauerei - elektrischer Strom erzeugt werden kann. Der Generator ist vorteilhafterweise mit Speichereinrichtungen verbunden, in welchen der erzeugte Strom zumindest temporär vor seinem Verbrauch gespeichert werden kann.

In einer weiteren vorteilhaften Ausgestaltung ist die Einrichtung zur Verfeuerung Teil eines Blockheizkraftwerkes bzw. mit einem solchen verbunden.

Darüber hinaus ist die Einrichtung zur Verfeuerung vorteilhafterweise mit Apparaturen verbunden, durch welche insbesondere Rauchgase zur Trocknung weiterer Stoffe, hier vorzugsweise Presshefen, nasser Altetiketten oder Treber, herangezogen werden können. Dies können beispielsweise einfache Wärmetauscher mit Einrichtungen zur Abfuhr der beim Trocknungsvorgang entweichenden Dämpfe sein. Darüber hinaus können auch spezielle Trockner zum Einsatz kommen, in welche zumindest zu gewissen Teilen auch das heiße, trockene Rauchgas eingeblasen werden kann. Solche Trockner sind hinlänglich bekannt Deren Aufbau und Funktionsweise kann einschlägiger Fachliteratur entnommen werden.

In einer vorteilhaften Ausführung ist die Vorrichtung mit Apparaturen zum Abtransport der resultierenden Asche verbunden. Diese weisen vorzugsweise Fördereinrichtungen auf, mit welchen die Asche - evtl. nach einer vorangegangenen Kühlung - abgeführt und für Düngezwecke aufbereitet bzw. abgepackt werden kann.

Zur Steuerung und/oder Regelung des Prozesses weist die Vorrichtung darüber hinaus eine Steuer-, Mess- und/oder Regeleinheit auf, mit welcher insbesondere der Abtrennungsgrad der Spelzen, der der Trennvorrichtung zur Abtrennung von Spelzen zugeführte Massenstrom Malz, der aus der Trennvorrichtung zur Abtrennung der Spelzen abgeführte Massenstrom Spelzen, der der Einrichtung zur Verfeuerung zugeführte Massenstrom Spelzen, der aus der Einrichtung zur Verfeuerung abgeführte Massenstrom Asche und/oder die Verfeuerungsleistung gemessen, gesteuert und/oder geregelt werden können. Bei Verwendung von zusätzlicher Rohfrucht können mittels der Steuer-, Mess- und/oder Regeleinheit auch die gleichen Prozesse bei der Abtrennung von Schalen von der Rohfrucht gemessen, gesteuert und/oder geregelt werden. Zur Messung der Massenströme ist die Steuer-, Mess- und/oder Regeleinheit vorteilhafterweise mit geeigneten Wägeeinrichtungen verbunden. Bei zusätzlicher Verfeuerung vorgetrockneter weiterer Stoffe, wie beispielsweise Treber oder Altetiketten, können mittels der Steuer-, Messund/oder Regeleinheit auch die Zuführung der zu trocknenden Stoffe zu den Apparaten zur Trocknung, deren Trocknungsgrad sowie deren Zuführung zur Verfeuerungseinrichtung gesteuert, gemessen und/oder geregelt werden.

Die Vorrichtung einschließlich der Behälter und Leitungen ist vorzugsweise aus Edelstahl aufgebaut. Alternativ kann die Vorrichtung aus einem anderen Metall oder gegebenenfalls auch aus einem geeigneten Kunststoff bestehen. Der Behälter sowie die entsprechenden Verbindungsleitungen sind gegebenenfalls isoliert, um Abstrahlverluste zu vermeiden.

Ein Ausführungsbeispiel der Erfindung wird anhand einer Zeichnung näher erläutert. Dabei zeigt die einzige Figur schematisch eine Vorrichtung zur Bierbereitung.

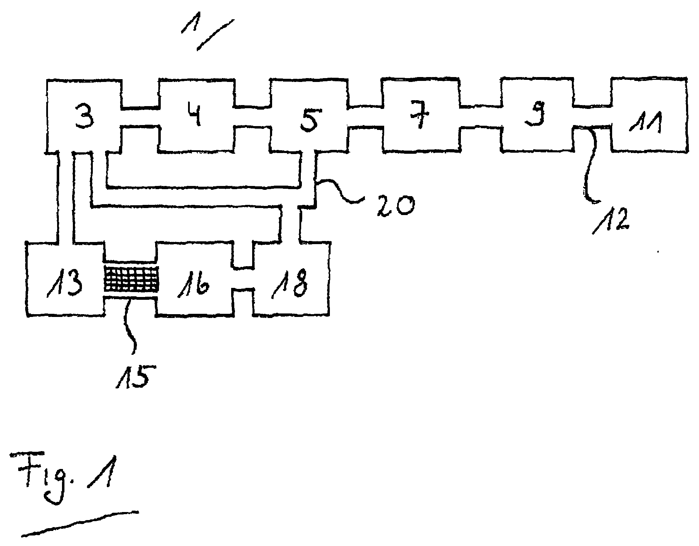

In Fig. 1 ist schematisch eine Vorrichtung 1 zur Bierbereitung dargestellt Die Vorrichtung 1 umfasst hierbei einen Maischebottich 3, der der Zubereitung von Maische insbesondere unter der Verwendung von Malz dient An den Maischebottich 3 ist ein Läuterbottich 4 zur Durchführung einer Fest-Flüssig-Trennung und somit zur Würzeerzeugung sowie eine Würzepfanne 5 angeschlossen, in welcher die Temperaturbehandlung der Würze zum Abreichern unerwünschter und zum Anreichern gewollter Aromastoffe durchgeführt wird. Bei üblichen Brauvorgängen spricht man hierbei auch von der "Würzekochung". Die Würze kann, wie später noch beschrieben, aber auch einer Rektifikation unterzogen oder auch in einer sonstigen Art und Weise temperaturbehandelt werden. Der Würzepfanne 5 ist ein Heißtrubabscheider 7 nachgeschaltet, in welchem die während der Temperaturbehandlung der Würze gebildeten Eiweiße abgeschieden werden. Geschieht dies durch eine Zirkulation, so spricht man auch von einem "Whirlpool". Die aus dem Heißtrubabscheider 7 gewonnene Würze gelangt schließlich in einen Kühlbehälter 9, in dem die Würze auf eine gewünschte Temperatur abgekühlt wird. Anschließend wird die Würze gegebenenfalls unter Zusatz von Hefe in einem Gärbehälter 11 zu Bier vergoren. Zur Überführung der Maische oder der Würze in die entsprechenden Behälter sind diese mittels einer Leitung 12 miteinander verbunden.

Die Vorrichtung 1 weist darüber hinaus eine Trennvorrichtung 13 zur Abtrennung von Spelzen auf, welche in diesem Fall als 6-Walzen-Schrotmühle mit Rüttelsieben zur Spelzenabtrennung aus dem erzeugten Malzschrot ausgebildet ist. Somit kann mit dieser Trennvorrichtung 13 zur Abtrennung von Spelzen auch der vor dem Einmaischen durchzuführende Schrotprozess vollzogen werden. Darüber hinaus weist die Vorrichtung 1 auch eine nicht näher dargestellte Steuer-, Regel- und/oder Messeinheit zur Steuerung, Regelung und/oder Messung von Prozessparametem auf.

Im Gegensatz zu herkömmlichen Vorrichtungen zur Bierbereitung, bei welchen eine Apparatur zur Abtrennung der Spelzen des Malzes vorhanden ist, ist die Trennvorrichtung 13 zur Abtrennung von Spelzen Ober geeignete Fördereinrichtungen 15, welche hier als Förderbänder ausgestaltet sind, mit einer Einrichtung 16 zur Verfeuerung von zumindest Teilen der abgetrennten Spelzen verbunden, welche wiederum mit einem Dampfkessel 18 zu Erzeugung für Prozessdampf verbunden ist. Dieser Dampfkessel 18 ist mit einem Dampfleitungsnetz 20, welches aus verschiedenen Dampfleitungen mit einer nicht näher dargestellten Kondensatrückführung sowie nicht naher dargestellten Ventilen zur Absperrung einzelner Leitungen besteht, verbunden. Die Dampfzufuhr zu den einzelnen Sudbehältem kann über eine nicht näher dargestellte Steuer-, Mess- und/oder Regeleinheit eingesteilt werden. Über dieses Dampfleitungsnetz 20 können die einzelnen Sudhauseinrichtungen mit Heizdampf versorgt werden.

Anders als bei herkömmlichen Brauprozessen, werden von dem zum Brauen eingesetzten Malz während des Schrotens - also vor dem Einmaischen in den Maischebottich 3 - mittels der Trennvorrichtung 13 35 % der vorher enthaltenen Spelzen im trockenen Zustand entfernt und über die Fördereinrichtungen 15 der Einrichtung 16 zur Verfeuerung zugeführt, während das geschrotete Malz zusammen mit den restlichen Spelzen eingemaischt wird. Da bereits zu Beginn des Brauprozesses, also während des Schrotens, trockene Spelzen zur Einrichtung 16 zur Verfeuerung zugeführt werden, kann aus diesen Spelzen bereits am Anfang des Maischens Energie bzw. Wärme erzeugt werden, mit welcher der Dampfkessel 18 beheizt und somit Prozessdampf für den Brauprozess zur Verfügung gestellt wird. Ober das Dampfleitungsnetz 20 wird der erzeugte Prozessdampf bereits für die Aufheizvorgänge beim Maischen verwendet. Nach erfolgtem Maischprozess wird die Maische, welche im Gegensatz zu herkömmlichen Brauverfahren einen um 35 % geringeren Spelzenanteil aufweist, Ober die Leitung 12 dem Läuterbottich 4 zur Abtrennung der in der Maische enthaltenen Feststoffe zugeleitet Aufgrund der reduzierten Spelzenmenge bildet sich in dem Läuterbottich 4 eine ausreichende, aber niedrigere Filterschicht aus, welche der zu klärenden Maische einen geringeren Widerstand entgegensetzt. Aus diesem Grund kann der Läuterprozess hier schneller ablaufen als bei herkömmlichen Brauverfahren, ohne hierbei Einbußen In der Qualität bzw. Effektivität des Läutervorganges hinnehmen zu müssen. Da der Läuterprozess den geschwindigkeitsbestimmenden Schritt im Prozess der Würzebereitung darstellt, resultiert hieraus eine nicht zu unterschätzender Zeitersparnis. Die geklärte Maische bzw. die Würze wird Ober die Leitung 12 der Würzepfanne 5 zugeführt, in welcher sie aufgeheizt und einer 4-prozentigen Verdampfung unterzogen wird. Die hierfür benötigte Energie wird wiederum zumindest teilweise aus den abgetrennten Spelzen gewonnen und über das Dampfleitungsnetz 20 der Würzepfanne 5 zugeführt. Im Anschluss an die Würzekochung, bei welcher auch die Hopfung erfolgt, gelangt die Würze über die Leitung 12 in den Heißtrubabscheider 7, wo der während der Temperaturbehandlung ausgefallene Heißtrub abgetrennt wird. Im Anschluss daran gelangt die geklärte Würze über die Leitung 12 zum Kühlbehälter 9, wo sie auf Ansteiltemperatur heruntergekühlt wird und im Gegenzug Haupt- und Nachguss des folgenden Brauprozesses auf die benötigten Temperaturen aufgeheizt werden. Ober die Leitung 12 wird die gekühlte Würze dem Gärbehälter 11 zugeführt, wo sie nach einer ausreichenden Belüftung vergoren wird.

Da die Würze hier mit einer ursprünglichen Malzschüttung von 16 kg/hl hergestellt wurde und das Malz einen Spelzenanteil von ca. 15 % enthielt, können hiermit bei einer Abtrennung und Verfeuerung von 35 % der ursprünglich im Malz enthaltenen Spelzen ca. 4 kWh/hl an Energie zur Verfügung gestellt werden. Bei einem 50 %igen Hauptgussanteil und einer Einmaischtemperatur von ca. 64 °C benötigt der Prozess ohne Einrichtungen zur Wärmerückgewinnung der in den Brüden enthaltenen Energie ca. 6 kWh/hl an thermischer Energie. Somit können unter Vemachlässigung spezifischer Wirkungsgradverluste durch die Spelzenverbrennung bereits ca. zwei Drittel der benötigten Energie bereitgestellt werden. Zur Erzeugung der restlichen Energie, werden der Einrichtung 16 zur Verfeuerung zusätzlich Hackschnitzel und/oder Holzpellets in der Menge zugeführt, dass die gesamte benötigte Wärmeenergie mittels der Einrichtung 16 zur Verfeuerung erzeugt werden kann. Somit kann bei Verwendung der Vorrichtung 1 auf den Einsatz fossiler Brennstoffe für die Würzeherstellung vollkommen verzichtet werden.

Die bei aus der Verfeuerung resultierende Asche wird in einem nicht näher dargestellten Vorratsbehälter gesammelt und zur Düngung von Braugetreide verwendet, wodurch der geschlossene Kreislauf und der Umweltaspekt insbesondere zur Imagesteigerung auch nach außen hin kommuniziert werden kann.

In einer anderen Ausgestaltung ist die Würzepfanne 5 als Rektifikationswürzekochsystem ausgebildet, wodurch eine identische Abreicherung unerwünschter Würzearomastoffe mit nur ca. 1 % Gesamtverdampfung erzielt werden kann. Hierdurch verringert sich die zur Herstellung der Würze benötigte Energie unter Vernachlässigung spezifischer Wirkungsgradverluste auf ca. 4 kWh/hl, wodurch bereits bei der angegebenen 35 %igen Reduktion des Spelzenzusatzes die gesamte Energie für die Würzebereitung allein aus der erfindungsgemäßen Verfeuerung der abgetrennten Spelzen zur Verfügung gestellt werden kann. Durch eine Variation des Anteils der abgetrennten und verfeuerten Spelzen sowie durch die zusätzliche Verbrennung von in der Brauerei anfallenden (Abfall-)Stoffen kann darüber hinaus auf einen schwankenden oder zusätzlichen Energiebedarf problemlos reagiert werden.

Durch die Erfindung können Brauereien somit den Hauptanteil der benötigten Energie selbst erzeugen, wodurch nicht nur deren Unabhängigkeit steigt, sondern sich vor allem auch enorme monetäre Vorteile ergeben.

### Bezugszeichenliste

- 1: Vorrichtung
- 3: Maischebottich
- 4: Läuterbottich/Läutereinrichtung
- 5: Würzepfanne
- 7: Heißtrubabschelder (Whirlpool)
- 9: Kühlbehälter
- 11: Gärbehälter
- 12: Leitung
- 13: Trennvorrichtung zur Abtrennung der Spelzen
- 15: Fördereinrichtung
- 16: Einrichtung zur Verfeuerung
- 18: Dampfkessel
- 20: Dampfleitungsnetz

## Patentansprüche

1. Verfahren zur Bierbereitung, wobei aus Malz eine Maische hergestellt, aus der Maische durch einen Läuterprozess eine Würze gewonnen, die Würze einer Temperaturbehandlung unterzogen, aus der behandelten Würze der Heißtrub abgeschieden, und nach der Heißtrubabscheidung aus der Würze durch eine Gärung Bier gewonnen wird,
**dadurch gekennzeichnet,**
**dass** die Spelzen vor dem Einmaischen vollständig vom Malz abgetrennt werden und ein Teil der zuerst vollständig abgetrennten Spelzen dem Brauprozess vor oder während eines Läuterprozesses wieder zugeführt wird,
wobei das Verfahren ferner **dadurch gekennzeichnet ist, dass** ein Teil der abgetrennten Spelzen im trockenen Zustand zur Energiegewinnung verfeuert wird und die bei der Verfeuerung frei werdende Energie für den Brauprozess genutzt wird,
wobei die Reduktion des Spelzenzusatzes zum Brauprozess beim Einsatz eines Läuterbottichs zwischen 10 und 60 % und beim Einsatz eines Maischefilters oder einer Zentrifuge zur Läuterung zwischen 30 und 95 % beträgt.

2. Verfahren nach Anspruch 1,
**dadurch gekennzeichnet,**
**dass** die bei der Verfeuerung frei werdende Energie für die Würzebereitung genutzt wird.

3. Verfahren nach einem der Ansprüche 1 oder 2,
**dadurch gekennzeichnet,**
**dass** der Läuterprozess mittels eines Läuterbottichs durchgeführt wird, wobei vorzugsweise 10 bis 60 %, insbesondere zwischen 20 und 60 %, der Spelzen des verwendeten Malzes zur Energiegewinnung verfeuert werden.

4. Verfahren nach einem der Ansprüche 1 oder 2,
**dadurch gekennzeichnet,**
**dass** der Läuterprozess mittels eines Maischefilters durchgeführt wird, wobei vorzugsweise 30 bis 95 %, insbesondere zwischen 50 und 80 %, der Spelzen des verwendeten Malzes zur Energiegewinnung verfeuert werden.

5. Verfahren nach einem der Ansprüche 1 bis 4,
**dadurch gekennzeichnet,**
**dass** die Abtrennung der Spelzen durch Zerkleinern des Malzes und anschließendes Abtrennen der Spelzenreste erfolgt.

6. Verfahren nach einem der Ansprüche 1 bis 4,
**dadurch gekennzeichnet,**
**dass** die Abtrennung der Spelzen durch ein Schälen des Malzes und anschließendes Abtrennen der Spelzenreste erfolgt.

7. Verfahren nach einem der vorhergehenden Ansprüche,
**dadurch gekennzeichnet,**
**dass** zusätzlich zum Malz ein Rohfruchtanteil verwendet wird, wobei insbesondere die Schale der Rohfrucht vor dem Einmaischen ebenfalls zumindest teilweise von der Rohfrucht abgetrennt wird und zumindest ein Teil der abgetrennten Schale zur Energiegewinnung verfeuert wird.

8. Verfahren nach einem der vorhergehenden Ansprüche,
**dadurch gekennzeichnet,**
**dass** die Spelzen während des Brauprozesses unmittelbar vor dem Einmaischen vom Malz abgetrennt werden.

9. Verfahren nach einem der vorhergehenden Ansprüche,
**dadurch gekennzeichnet,**
**dass** zusätzlich zu den Spelzen und/oder den Schalen noch weitere Brennstoffe, insbesondere Pellets und/oder Hackschnitzel, zur Energiegewinnung verfeuert werden, welche insbesondere mit den Spelzen und/oder Schalen vermischt werden.

10. Verfahren nach einem der vorhergehenden Ansprüche,
**dadurch gekennzeichnet,**
**dass** die bei der Verfeuerung entstehende Abwärme zum Trocknen von weiteren Stoffen, insbesondere von Treber, verwendet wird, wobei die getrockneten weiteren Stoffe, insbesondere der getrocknete Treber, ebenfalls zur Energiegewinnung verfeuert werden.

11. Vorrichtung (1) zur Bierbereitung, mit einem Behälter (3) zur Maischebereitung, mit einer Läutereinrichtung (4), mit einem Behälter (5) zur Temperaturbehandlung der Würze, mit einem Heißtrubabscheider (7), mit einem Gärbehälter (9) und mit einer Trennvorrichtung (13) zur Abtrennung der Spelzen vom Malz, insbesondere einer Mühle oder Schälmaschine,
**dadurch gekennzeichnet, dass**
die Trennvorrichtung (13)
zur vollständigen Abtrennung der Spelzen vom Malz, wobei ein Teil der zuerst vollständig abgetrennten Spelzen dem Brauprozess vor oder während eines Läuterprozesses wieder zugeführt wird,
mit einer Einrichtung (16)
zur Verfeuerung eines Teils der sich im trockenen Zustand befindenden abgetrennten Spelzen zwecks Energiegewinnung, wobei die bei der Verfeuerung frei werdende Energie für den Brauprozess genutzt wird, mittels Fördereinrichtungen zum Transport der abgetrennten Spelzen verbunden ist.

12. Vorrichtung (1) nach Anspruch 11,
**dadurch gekennzeichnet,**
**dass** die Einrichtung (16) zur Verfeuerung der abgetrennten Spelzen mit einem Dampfkessel (18) verbunden ist.

13. Vorrichtung (1) nach einem der Ansprüche 11 oder 12,
**dadurch gekennzeichnet,**
**dass** die Einrichtung (16) zur Verfeuerung der abgetrennten Spelzen rauchgasseitig mit einer Apparatur zur Trocknung weiterer Stoffe, vorzugsweise Treber, verbunden ist.

14. Vorrichtung (1) nach einem der Ansprüche 11 bis 13,
**dadurch gekennzeichnet,**
**dass** sie eine Einrichtung zum Entfernen von Schalen von Rohfrucht aufweist, welche mit der Einrichtung (16) zur Verfeuerung der abgetrennten Spelzen verbunden ist.

15. Vorrichtung (1) nach einem der Ansprache 11 bis 14,
**dadurch gekennzeichnet,**
**dass** sie eine Steuer-, Mess- und/oder Regeleinheit aufweist, mit welcher der Abtrennungsgrad der Spelzen, der der Trennvorrichtung (13) zur Abtrennung der Spelzen zugeführte Massenstrom Malz, der aus der Trennvorrichtung (13) zur Abtrennung der Spelzen abgeführte Massenstrom Spelzen, der der Einrichtung (16) zur Verfeuerung zugeführte Massenstrom Spelzen, der aus der Einrichtung (16) zur Verteuerung abgeführte Massestrom Asche und/oder die Verfeuerungsleistung gesteuert, gemessen und/oder geregelt werden kann.

## Claims

1. A method for the preparation of beer, wherein a mash is produced from malt, a wort is obtained from the malt by means of a lautering process, the wort is subjected to a thermal treatment, the hot trub is separated from the treated wort and beer is obtained by fermentation after the hot trub separation from the wort,
**characterized in**
**that** the husks will be completely separated from the malt before the mashing and a part of the at first completely separated husks will be resupplied to the brewing process before or during a lautering process,
wherein the method is further **characterized in that** a part of the separated husks in the dry state will be burnt for generating energy and the energy released during the combustion will be used for the brewing process, wherein the reduction of the husk addition to the brewing process is comprised between 10 and 60 %, if a lauter tun is used, and is comprised between 30 and 95 %, if a mash filter or a centrifuge is used for lautering.

2. A method according to claim 1,
**characterized in**
**that** the energy released during the combustion is used for the wort preparation.

3. A method according to one of the clams 1 or 2,
**characterized in**
**that** the lautering process is realized by means of a lauter tun, wherein preferably 10 through 60 %, especially between 20 and 60 % of the husks of the used malt will be burnt for generating energy.

4. A method according to one of the claims 1 or 2,
**characterized in**
**that** the lautering process is realized by means of a mash filter, wherein preferably 30 through 95 %, especially between 50 and 80 % of the husks of the used malt will be burnt for generating energy.

5. A method according to one of the claims 1 through 4,
**characterized in**
**that** the husks are separated by crushing the malt and subsequently separating the husk remains.

6. A method according to one of the claims 1 through 4,
**characterized in**
**that** the husks are separated by peeling the malt and subsequently separating the husk remains.

7. A method according to one of the preceding claims,
**characterized in**
**that** additionally to the malt, a proportion of raw grain is used, wherein especially the skin of the raw grain is also at least partially separated from the raw grain before mashing and at least a part of the separated skin is burnt for generating energy.

8. A method according to one of the preceding claims,
**characterized in**
**that** the husks are separated from the malt during the brewing process immediately before mashing.

9. A method according to one of the preceding claims,
**characterized in**
**that** additionally to the husks and/or skins, other fuels, especially pellets and/or wood chips are burnt for generating energy, which other fuels are mixed in particular with the husks and/or skins.

10. A method according to one of the preceding claims,
**characterized in**
**that** the heat generated during the combustion is used for drying other materials, in particular spent grains, wherein the dried other materials, in particular the dried spent grains, are also burnt for generating energy.

11. A device (1) for the preparation of beer, comprising a container (3) for the preparation of the mash, a lautering device (4), a container (5) for the thermal treatment of the wort, a hot trub separator (7), a fermentation tank (9) and a separation device (13) for separating the husks from the malt, in particular a mill or a peeling machine,
**characterized in that**
the separation device (13) for completely separating the husks from the malt, wherein a part of the at first completely separated husks is resupplied to the brewing process before or during a lautering process,
is connected to
a device (16)
for burning a part of the separated husks, which are in the dry state, for generating energy, wherein the energy which is released during the combustion is used for the brewing process,
by means of conveyors for the transport of the separated husks.

12. A device (1) according to claim 11,
**characterized in**
**that** the device (16) for burning the separated husks is connected to a steam boiler (18).

13. A device (1) according to one of the claims 11 or 12,
**characterized in**
**that** the device (16) for burning the separated husks is connected, on the flue gas side, to an equipment for drying other materials, preferably spent grains.

14. A device (1) according to one of the claims 11 through 13,
**characterized in**
**that** it comprises a device for removing skins from the raw grain, which device is connected to the device (16) for burning the separated husks.

15. A device (1) according to one of the claims 11 through 14,
**characterized in**
**that** it comprises a control, measuring and regulation unit, by means of which the separation degree of the husks, the mass flow of malt supplied to the separation device (13) for separating the husks, the mass flow of husks leaving the separation device (13) for separating the husks, the mass flow of husks supplied to the device (16) for burning the husks, the mass flow of ashes leaving the device (16) for burning the husks and/or the combustion power can be controlled, measured and/or regulated.

## Revendications

1. Procédé de préparation de bière, dans lequel on produit une maische à partir d'un malt, on obtient un moût à l'aide d'un processus de filtrage de la maische, on soumet le moût à un traitement thermique, on sépare à chaud le dépôt de bac du moût traité et on obtient de la bière par une fermentation après la séparation à chaud du dépôt de bac du moût,
**caractérisé en ce**
**qu'**on sépare les bractées complètement du malt avant l'empâtage et on ramène une partie des bractées, qui ont d'abord été complètement séparées, au processus de brassage avant ou au cours d'un processus de filtrage,
le procédé étant en outre **caractérisé en ce qu'**on brûle une partie des bractées séparées à l'état sec pour gagner de l'énergie et on utilise l'énergie dégagée pendant le brûlage pour le processus de brassage,
dans lequel la réduction de l'addition de bractées au processus de brassage est comprise entre 10 et 60 %, si on utilise une cuve à filtration, et est comprise entre 30 et 95 %, si on utilise un filtre de maische ou un centrifuge pour le filtrage.

2. Procédé selon la revendication 1,
**caractérisé en ce**
**qu'**on utilise l'énergie dégagée au cours du brûlage pour la préparation de moût.

3. Procédé selon l'une des revendications 1 ou 2,
**caractérisé en ce**
**qu'**on réalise le processus de filtrage à l'aide d'une cuve à filtration, et qu'on brûle de préférence 10 à 60 %, notamment entre 20 et 60 % des bractées du malt utilisé pour gagner de l'énergie.

4. Procédé selon l'une des revendications 1 ou 2,
**caractérisé en ce**
**qu'**on réalise le processus de filtrage à l'aide d'un filtre de maische, et qu'on brûle de préférence 30 à 95 %, notamment entre 50 et 80 % des bractées du malt utilisé pour gagner de l'énergie.

5. Procédé selon l'une des revendications 1 à 4,
**caractérisé en ce**
**que** la séparation des bractées se fait par un concassage du malt et une séparation suivante des restes de bractées.

6. Procédé selon l'une des revendications 1 à 4,
**caractérisé en ce**
**que** la séparation des bractées se fait par un décorticage du malt et une séparation suivante des restes de bractées.

7. Procédé selon l'une des revendications précédentes,
**caractérisé en ce**
**qu'**on n'utilise pas seulement le malt, mais aussi une part de grain cru, notamment la peau du grain cru étant au moins partiellement séparée du grain cru et au moins une partie de la peau séparée étant brûlée pour gagner de l'énergie.

8. Procédé selon l'une des revendications précédentes,
**caractérisé en ce**
**qu'**on sépare les bractées du malt au cours du processus de brassage immédiatement avant l'empâtage.

9. Procédé selon l'une des revendications précédentes,
**caractérisé en ce**
**qu'**on brûle, supplémentairement aux bractées et/ou aux peaux, encore d'autres carburants, notamment des pellets et/ou des copeaux, pour gagner de l'énergie, lesquels carburants sont mélangés avec les bractées et/ou les peaux.

10. Procédé selon l'une des revendications précédentes,
**caractérisé en ce**
**qu'**on utilise la chaleur émise pendant le brûlage pour sécher d'autres matières, notamment de la drêche, les autres matières séchées, notamment la drêche séchée, étant aussi brûlées pour gagner de l'énergie.

11. Dispositif (1) de préparation de bière, comprenant un récipient (3) pour la préparation de maische, un dispositif de filtrage (4), un récipient (5) pour le traitement thermique du moût, un séparateur à chaud (7) du dépôt de bac, une cuve de fermentation (9) et un dispositif de séparation (13) pour séparer les bractées du malt, notamment un moulin ou une décortiqueuse, **caractérisé en ce que**
le dispositif de séparation (13) pour la séparation complète des bractées du malt, une partie des bractées, qui ont d'abord été complètement séparées, étant ramenée au processus de brassage avant ou pendant le processus de filtrage,
est relié
à un dispositif (16)
pour le brûlage d'une partie des bractées séparées, qui se trouvent dans l'état sec, pour gagner de l'énergie, l'énergie dégagée au cours du brûlage étant utilisée pour le processus de brassage,
par moyen de dispositifs de transport pour le transport des bractées séparées.

12. Dispositif (1) selon la revendication 11,
**caractérisé en ce**
**que** le dispositif (16) pour le brûlage des bractées séparées est relié à une chaudière à vapeur (18).

13. Dispositif (1) selon l'une des revendications 11 ou 12,
**caractérisé en ce**
**que** le dispositif (16) pour le brûlage des bractées séparées est relié, du côté des gaz de fumée, à un appareil destiné au séchage d'autres matières, de préférence de la drêche.

14. Dispositif (1) selon l'une des revendications 11 à 13,
**caractérisé en ce**
**qu'**il comprend un dispositif pour enlever les peaux des grains crus, lequel est relié au dispositif (16) pour le brûlage des bractées séparées.

15. Dispositif (1) selon l'une des revendications 11 à 14,
**caractérisé en ce**
**qu'**il comprend une unité de commande, de mesure et/ou de réglage, à l'aide de laquelle on peut commander, mesurer et/ou régler le degré de séparation des bractées, le débit de masse de malt amené au dispositif de séparation (13) pour la séparation des bractées, le débit de masse de bractées quittant le dispositif de séparation (13) pour la séparation des bractées, le débit de masse de bractées amené au dispositif de brûlage (16), le débit de masse de cendre quittant le dispositif de brûlage (16) et/ou l'efficacité de brûlage.
